(19) Europäisches Patentamt
European Patent Office
Office européen des brevets

(11) **EP 0 707 718 B1**

(12) **EUROPÄISCHE PATENTSCHRIFT**

(45) Veröffentlichungstag und Bekanntmachung des Hinweises auf die Patenterteilung:
**03.09.1997 Patentblatt 1997/36**

(51) Int Cl.⁶: **G05B 5/01**, G05B 11/42

(21) Anmeldenummer: **94918730.6**

(22) Anmeldetag: **22.06.1994**

(86) Internationale Anmeldenummer:
**PCT/DE94/00708**

(87) Internationale Veröffentlichungsnummer:
**WO 95/02211 (19.01.1995 Gazette 1995/04)**

(54) **REGELEINRICHTUNG**

CONTROLLING DEVICE

SYSTEME DE REGULATION

(84) Benannte Vertragsstaaten:
**AT BE CH DE DK ES FR GB IT LI NL PT SE**

(30) Priorität: **05.07.1993 DE 4322366**

(43) Veröffentlichungstag der Anmeldung:
**24.04.1996 Patentblatt 1996/17**

(73) Patentinhaber: **SIEMENS AKTIENGESELLSCHAFT 80333 München (DE)**

(72) Erfinder: **PREUSS, Hans-Peter D-76189 Karlsruhe (DE)**

(56) Entgegenhaltungen:
- **PATENT ABSTRACTS OF JAPAN vol. 6, no. 166 (P-138) (1044) 31. August 1982 & JP,A,57 083 801 (FUJI DENKI SEIZO K.K.) 25. Mai 1982**
- **PATENT ABSTRACTS OF JAPAN vol. 6, no. 166 (P-138) (1044) 31. August 1982 & JP,A,57 083 802 (YOKOGAWA DENKI SEISAKUSHO K.K.) 25. Mai 1982**
- **PATENT ABSTRACTS OF JAPAN vol. 6, no. 241 (P-158) (1119) 30. November 1982 & JP,A,57 139 805 (MATSUSHITA DENKI SANGYO K.K.) 30. August 1982**
- **PATENT ABSTRACTS OF JAPAN vol. 6, no. 188 (P-144) (1066) 28. September 1982 & JP,A,57 100 503 (MATSUSHITA DENKI SANGYO K.K.) 22. Juni 1982**
- **PATENT ABSTRACTS OF JAPAN vol. 6, no. 166 (P-138) (1044) 31. August 1982 & JP-A-57 083 801**
- **PATENT ABSTRACTS OF JAPAN vol. 6, no. 166 (P-138) (1044) 31. August 1982 & JP-A-57 083 802**
- **PATENT ABSTRACTS OF JAPAN vol. 6, no. 241 (P-158) (1119) 30. November 1982 & JP-A-57 139 805**
- **PATENT ABSTRACTS OF JAPAN vol. 6, no. 188 (P-144) (1066) 28. September 1982 & JP-A-57 100 503**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

## Beschreibung

Die Erfindung betrifft eine Regeleinrichtung, in der einem Regler, durch welchen aus einem Vergleich zwischen Führungsgröße und Regelgröße eine Regeldifferenz und daraus eine Reglerausgangsgröße ermittelbar sind, ein Steller mit Stellgrößenbegrenzung nachgeschaltet ist.

In der Regelungstechnik werden wegen ihrer guten Eigenschaften und einfacher mathematischer Verfahren zur Parameteroptimierung häufig lineare Regler verwendet. Trotz der linearen Reglerfunktion erhalten damit versehene Regeleinrichtungen durch verschiedene praxisbedingte Funktionserweiterungen nichtlineares Verhalten. Dies ist z. B. bei Betriebsartenumschaltung von Hand- auf Automatikbetrieb oder bei Ansprechen von Stellgrößenbegrenzungen der Fall. Die Regeleinrichtung verhält sich dann - zumindest vorübergehend - anders, als aufgrund der eingestellten Reglerparameter beabsichtigt. Wie stark das Regelverhalten insbesondere durch eine Stellgrößenbegrenzung verschlechtert wird, hängt wesentlich von der Realisierung der Regeleinrichtung ab. Eine Stellgrößenbegrenzung tritt prinzipiell bei allen realen Regelungssystemen auf, da die Stellgröße einen Minimalwert nicht unter- bzw. einen Maximalwert nicht überschreiten kann, durch welche der Stellbereich definiert wird.

Wenn nun der Regler eine Reglerausgangsgröße liefert, bei der die Stellgröße die Begrenzung erreicht, so kann die Reglerausgangsgröße nicht voll wirksam werden. Aus dem Buch "Regelungstechnik" von Otto Föllinger, 6. Auflage, erschienen 1990 im Hüthig Buch Verlag Heidelberg, ist bekannt, daß im Hinblick auf eine möglichst geringe Beeinträchtigung der Wirksamkeit der Regeleinrichtung die einfache Begrenzung der Stellgröße nicht ausreicht. Insbesondere bei PI- oder PID-Reglern wird der I-Anteil von der Stellgrößenbegrenzung nicht beeinflußt und wächst auf immer größere Werte an. Wenn die Regeldifferenz das Vorzeichen wechselt, bleibt die Stellgröße eine gewisse Zeit an ihren Begrenzungen "hängen", was zu erheblichen Überschwingungseffekten führen kann.

Der Erfindung liegt die Aufgabe zugrunde, eine Regeleinrichtung zu schaffen, die auch bei einem Steller mit Stellgrößenbegrenzung ein gutes Regelverhalten aufweist.

Zur Lösung dieser Aufgabe weist die neue Regeleinrichtung die im Anspruch 1 genannten Merkmale auf. Vorteilhafte Weiterbildungen der Erfindung sind in den Unteransprüchen angegeben.

Die Erfindung hat den Vorteil, daß die Stellgröße bei einem linearen Regler mit I-Anteil, auch wenn sie sich in der Begrenzung befunden hat, auf Änderungen der Regeldifferenz sehr schnell reagiert. Dadurch wirken sich Sprünge der Führungsgröße oder Störungen im Regelkreis, welche die Stellgröße in die Begrenzung treiben, weniger auf das Regelverhalten aus.

Anhand der Figuren werden im folgenden Ausgestaltungen und Vorteile der Erfindung näher erläutert. Es zeigen:

Figur 1              einen geschlossenen Regelkreis,
Figuren 2 und 3      Einschwingvorgänge von Regel- und Stellgröße nach einem Sollwertsprung sowie das Verhalten bei kurzzeitigem Meßwertausfall für eine aus der obengenannten Literaturstelle bekannte Regeleinrichtung bzw. für eine erfindungsgemäße Regeleinrichtung.

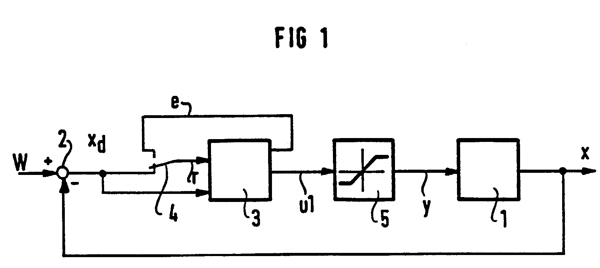

In einem Regelkreis nach Figur 1 zur Regelung einer Strecke 1 wird eine Regelgröße x gemessen und mit einer Führungsgröße w in einem Summationsglied 2 verglichen. Das Vergleichsergebnis wird als Regeldifferenz $x_d$ sowohl auf einen Regler 3 als auch auf einen Schalter 4 geführt. Der Schalter 4 legt wahlweise die Regeldifferenz $x_d$ oder eine vom Regler 3 gebildete Hilfsgröße e als Reglereingangsgröße r auf den Reglereingang. Der Regler 3 liefert eine Reglerausgangsgröße u an einen Steller 5, der wiederum mit einer Stellgröße y auf den Prozeß 1 einwirkt, um die Regelgröße x entsprechend der Führungsgröße w zu verändern. Der Steller 5 weist eine Stellgrößenbegrenzung auf, d. h., die Stellgröße y kann nur Werte in einem Bereich zwischen einem oberen Grenzwert $y_{max}$ und einem unteren Grenzwert $y_{min}$ annehmen, in welchem dann die Stellgröße y gleich der Reglerausgangsgröße u ist.

Die Übertragungsfunktion des Reglers 3 kann in der in Figur 1 gezeigten Schalterstellung mit der Regeldifferenz $x_d$ als Reglereingangsgröße r in komplexer Darstellung beschrieben werden durch die Formel:

$$R(s) = \frac{Y(s)}{X_d(s)} = K_p \left(1 + \frac{1}{s\,T_N} + s\,T_v\right). \qquad (1)$$

Die Übertragungsfunktion eines realen PID-Reglers, der den praktischen Verhältnissen näher kommt, lautet:

$$R(s) = \frac{Y(s)}{X_d(s)} = K_p \left(1 + \frac{1}{s\,T_N} + \frac{s\,T_v}{1 + s\,T_v/V}\right). \qquad (2)$$

Der zusätzliche Parameter Vorhaltverstärkung V dient lediglich zur Abschwächung der Differentiation.

Die in den Formeln auftretenden Größen haben die folgenden Bedeutungen:

$Y(s)$ - Laplace-Transformierte der Stellgröße $y(t)$,
$X_d(s)$ - Laplace-Transformierte der Regeldifferenz $x_d(t)$,
$W(s)$ - Laplace-Transformierte der Führungsgröße $w(t)$,
$X(s)$ - Laplace-Transformierte der Regelgröße $x(t)$,
$K_p$ - Proportionalbeiwert,
$T_N$ - Nachstellzeit,
$T_v$ - Vorhaltzeit und
$V$ - Vorhaltverstärkung.

Zur Realisierung in digital arbeitenden Systemen wird Gleichung (2) in eine zeitdiskrete Darstellungsform, den sogenannten PID-Algorithmus, umgesetzt. Dieser umfaßt folgende Gleichungen:

$$K_1 = 0{,}5 \, K_p \, T_A / T_N,$$

$$K_2 = 2 \, V \, K_p \, T_v / (V \, T_A + 2 \, T_v),$$

$$K_3 = (V \, T_A - 2 \, T_v) / (V \, T_A + 2 \, T_v), \tag{3}$$

$$\text{P-Anteil: } y_p(k) = K_p \, x_d(k),$$

$$\text{I-Anteil: } y_I(k) = y_I(k-1) + K_1 \, (x_d(k-1) + x_d(k)),$$

$$\text{D-Anteil: } y_D(k) = K_2 \, (x_d(k) - x_d(k-1)) - K_3 \, y_D(k-1), \tag{4}$$

Gesamt-Stellgröße $y(k)$ zum Abtastzeitpunkt $t = k*T_A$:

$$y(k) = y_p(k) + y_I(k) + y_D(k). \tag{5}$$

Die Hilfskonstanten $K_1$, $K_2$, $K_3$ müssen nur bei Änderungen der Parameter des Reglers 3 neu berechnet werden.

Der Grundgedanke besteht darin, beim Eintreten des Begrenzungsfalls die Stellgröße gleich dem Begrenzungswert zu setzen und gemäß dem Regelalgorithmus eine Hilfsgröße zu berechnen, und zwar derart, daß sie gerade das Erreichen des Stellgrößenbegrenzungswertes $y_{min}$ oder $y_{max}$ bewirkt.

Mit dieser Hilfsgröße werden anschließend der P-, I- und D-Anteil der Reglerausgangsgröße u neu berechnet. Als Vergangenheitswerte sind lediglich I- und D-Anteil relevant.

Für den wirksamen Begrenzungswert $y(k) = y_B$, der vorzugsweise noch innerhalb des Stellbereichs liegt, lautet die Gleichung (5) mit der Hilfsgröße $r(k) = e(k)$:

$$y_B = K_p \, e(k) + y_I(k-1) + K_1 \, (x_d(k-1) + e(k))$$

$$+ K_2 \, (e(k) - x_d(k-1)) - K_3 \, y_D(k-1). \tag{6}$$

Diese Gleichung kann nach $e(k)$ aufgelöst werden:

$$e(k) = \frac{y_B - y_I(k-1) - (K_1 - K_2) \, x_d(k-1) + K_3 \, y_D(k-1)}{K_p + K_1 + K_2}. \tag{7}$$

Mit diesem Wert werden die Anteile der Reglerausgangsgröße u des PID-Regelglieds, die gleich der Stellgröße y sind, neu berechnet:

$$y_p(k) = K_p \, e(k),$$

$$y_I(k) = y_I(k\text{-}1) + K_1 \, (x_d(k\text{-}1) + e(k)),$$

$$y_D(k) = K_2 \, (e(k) - x_d(k\text{-}1)) - K_3 \, y_D(k\text{-}1). \tag{8}$$

Die Stellgröße y nimmt dann gerade den Begrenzungswert an:

$$y(k) = y_p(k) + y_I(k) + y_D(k) = y_B. \tag{9}$$

Für P-, PD- oder PI-Regler bleibt das obige Verfahren in vereinfachter Form anwendbar, da je nach Typ nur I- und/ oder D-Anteil wegfallen. Besonders vorteilhaft ist es aber bei einem Regler mit PID-Regelglied anwendbar.

Durch die Hilfsgröße werden die Stellgrößenanteile modifiziert. Diese Modifikation kann analog auch als Anpassung der Reglerparameter realisiert werden.

Die erfindungsgemäße Regeleinrichtung kann gleichermaßen digital, z. B. als Softwaremodul auf einem Rechner, wie analog in einer elektronischen Schaltung ausgeführt werden.

Die vorteilhaften Eigenschaften der erfindungsgemäßen Regeleinrichtung werden am Beispiel eines Regelkreises für ein $PT_n$-Streckenmodell mit der Übertragungsfunktion

$$G(s) = \frac{1}{(1 + 10 \, s)^3} \tag{10}$$

und einem nach dem Betragsoptimum entworfenen PID-Regelglied mit

$$K_p = 2{,}31, \; T_N = 24{,}67 \; s, \; T_v = 6{,}49 \; s, \; V = 5{,}0 \tag{11}$$

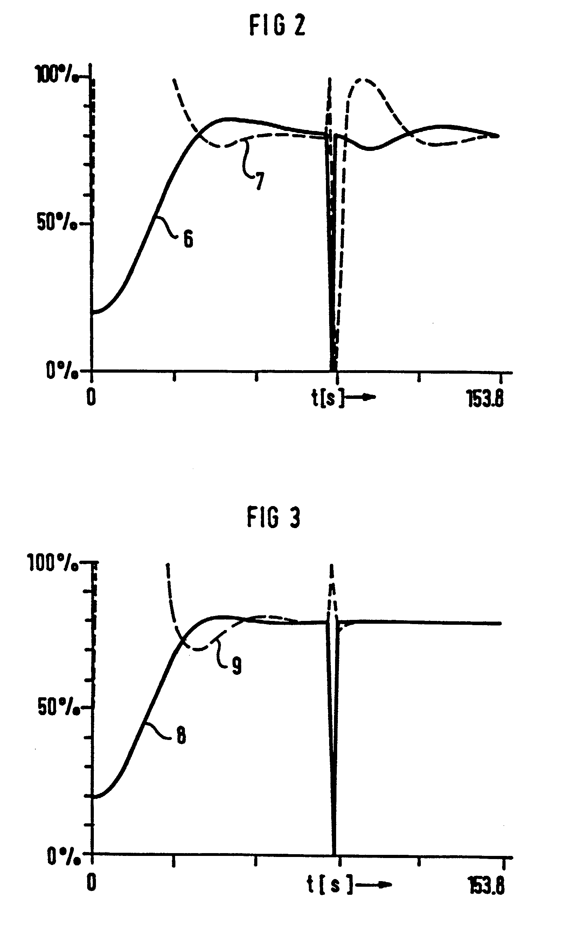

veranschaulicht. Dargestellt sind in den Figuren 2 und 3 jeweils das Einschwingen von Regel- und Stellgröße nach einem Sollwertsprung zum Zeitpunkt t = 0 sowie das Verhalten bei kurzzeitigem Meßwertausfall zum Zeitpunkt t = 90 s. Die Kurve 6 zeigt den Verlauf einer Regelgröße, die Kurve 7 den einer Stellgröße mit einer PI-Reglerbegrenzung, wie sie aus der oben erwähnten Literaturstelle, Seiten 308 bis 310 bekannt ist. Diese Verläufe sind sowohl nach dem Sollwertsprung als auch bei kurzzeitigem Meßwertausfall durch starke Überschwinger gekennzeichnet. Die Kurven 8 und 9 in Figur 3 für einen Regel - bzw. Stellgrößenverlauf mit der erfindungsgemäßen PID-Reglerbegrenzung zeigen dagegen ein deutlich geringeres Überschwingen und erheblich besseres dynamisches Verhalten der Regelung. Das Reglerverhalten ist nach Verlassen der Begrenzung deutlich weniger beeinträchtigt als bei dem bekannten Verfahren.

**Patentansprüche**

1. Regeleinrichtung

- mit einem Summationsglied (2), durch das aus einem Vergleich zwischen Führungsgröße (w) und Regelgröße (x) eine Regeldifferenz ($x_d$) ermittelt wird,
- mit einem PI- oder PID-Regelglied, mit dem aus der Regeldifferenz ($x_d$) eine Reglerausgangsgröße (u) ermittelbar ist, und
- mit einem Steller (5) mit Stellgrößenbegrenzung, der aus der Reglerausgangsgröße (u) eine Stellgröße (y) bildet,

**gekennzeichnet durch:**

- einen Schalter (4), durch den, wenn die durch die Reglerausgangsgröße (u) bestimmte Stellgröße (y) innerhalb ihres Stellbereichs liegt, die Regeldifferenz ($x_d$) als Reglereingangsgröße (r) auf das PI- oder PID-Regelglied geführt ist und durch den eine Hilfsgröße (e) als Reglereingangsgröße (r) auf das PI- oder PID-Regelglied geführt ist, wenn eine gedachte begrenzungsfreie Stellgröße aufgrund der Regeldifferenz ($x_d$) außerhalb des Stellbereichs liegen würde, wobei die Hilfsgröße (e) derart bestimmt wird, daß die Stellgröße (y) noch innerhalb ihres Stellbereichs liegt.

2. Regeleinrichtung nach Anspruch 1, **dadurch gekennzeichnet,**

- daß das PID-Regelglied ein digitales PID-Regelglied ist, dessen P-Anteil $y_p$, I-Anteil $y_I$ und D-Anteil $y_D$ nach den folgenden Formeln bestimmt werden:

$$\text{P-Anteil: } y_p(k) = K_p \, x_d(k),$$

$$\text{I-Anteil: } y_I(k) = y_I(k\text{-}1) + K_1 \, (x_d(k\text{-}1) + x_d(k)),$$

$$\text{D-Anteil: } y_D(k) = K_2 \, (x_d(k) - x_d(k\text{-}1)) - K_3 \, y_D(k\text{-}1),$$

mit den Hilfskonstanten

$$K_1 = 0,5 \, K_p \, T_A / T_N,$$

$$K_2 = 2 \, V \, K_p \, T_v / (V \, T_A + 2 \, T_v),$$

$$K_3 = (V \, T_A - 2 \, T_v) / (V \, T_A + 2 \, T_v),$$

die durch die Reglerparameter Proportionalbeiwert $K_p$, Nachstellzeit $T_N$, Vorhaltzeit $T_v$, Vorhaltverstärkung V und Abtastzeit $T_A$ bestimmt sind, und

- daß die Hilfsgröße (e) als Reglereingangsgröße (r), wenn eine gedachte begrenzungsfreie Stellgröße aufgrund der Regeldifferenz ($x_d$) außerhalb der Begrenzung liegen würde, nach der Formel:

$$e(k) = \frac{y_B - y_I(k\text{-}1) - (K_1 \text{-} K_2) \, x_d(k\text{-}1) + K_3 \, y_D(k\text{-}1)}{K_p + K_1 + K_2}$$

bestimmt wird.

3. Regeleinrichtung nach Anspruch 1 oder 2, **dadurch gekennzeichnet,** daß das PID-Regelglied nach der Methode des Betragsoptimums entworfen ist.

**Claims**

1. Control device

- having a summing element (2) by means of which a system deviation ($x_d$) is ascertained from a comparison between a reference variable (w) and a controlled variable (x),
- having a PI or a PID control element with which it is possible to ascertain a controller output variable (u) from the system deviation ($x_d$), and
- having a final control element (5) with manipulated-variable limitation, which element establishes a manipulated variable (y) from the controller output variable (u),

characterised by:

- a switch (4), by means of which, if the manipulated variable (y), which is determined by the controller output variable (u), lies within its total manipulated-variable range, the system deviation ($x_d$) is directed as a controller input variable (r) to the PI or PID control element, and by means of which an auxiliary variable (e) is directed as a controller input variable (r) to the PI or PID control element if an imaginary, limitation-free manipulated variable would lie outside the total manipulated-variable range on account of the system deviation ($x_d$), with the auxiliary variable (e) being determined in such a way that the manipulated variable (y) still lies within its total manipulated-variable range.

2. Control device according to claim 1, characterised

- in that the PID control element is a digital PID control element, the P component $y_p$, I component $y_I$ and D component $y_d$ of which are determined according to the following formulae:

P component: $y_p(k) = K_p \, x_d(k)$,
I component: $y_I(k) = y_I(k-1) + K_1 \, (x_d(k-1) + x_d(k))$,
D component: $y_D(k) = K_2 \, (x_d(k) - x_d(k-1)) - K_3 \, y_D(k-1)$,

with the auxiliary constants

$$K_1 = 0.5 \, K_p \, T_A \, / \, T_N,$$

$$K_2 = 2 \, V \, K_p \, T_v \, / \, (V \, T_A + 2 \, T_v),$$

$$K_3 = (V \, T_A - 2 \, T_v) \, / \, (V \, T_A + 2 \, T_v),$$

which are determined by the controller parameters proportional-action coefficient $K_p$, reset time $T_N$, derivative-action time $T_V$, derivative-action gain V and sampling time $T_A$, and
- in that, if an imaginary limitation-free manipulated variable would lie outside the limitation on account of the system deviation ($x_d$), the auxiliary variable (e) is determined as a controller input variable (r) according to the formula:

$$e(k) = \frac{y_B - y_I(k-1) - (K_1 - K_2) \, x_d(k-1) + K_3 \, y_D(k-1)}{K_p + K_1 + K_2} \, .$$

3. Control device according to claim 1 or 2, characterised in that the PID control element is designed according to the optimum amount method.

**Revendications**

1. Dispositif de régulation comportant

- un élément (2) de sommation, par lequel une différence ($x_d$) de régulation est calculée à partir d'une comparaison entre une grandeur (w) de conduite et une grandeur (x) réglée,
- un élément de régulation PI ou PID, par lequel une grandeur (u) de sortie de régulateur peut être déterminée à partir de la différence ($x_d$) de régulation et
- un organe (5) de réglage à limitation de grandeur réglante, qui forme à partir de la grandeur (u) de sortie du régulateur une grandeur (y) réglante,

caractérisé par :

- un commutateur (4), par lequel la différence ($x_d$) de régulation est envoyée, lorsque la grandeur réglante (y) déterminée par la grandeur (u) de sortie de régulateur se trouve dans son domaine de réglage, en tant que grandeur (r) d'entrée de régulateur à l'élément de régulation PI ou PID et par lequel une grandeur auxiliaire (e) est envoyée en tant que grandeur (r) d'entrée de régulateur à l'élément de régulation PI ou PID, si une grandeur réglante imaginaire sans limitation se trouvait, en raison de la différence ($x_d$) de régulation à l'extérieur du domaine de réglage, la grandeur auxiliaire (e) étant déterminée de telle sorte que la grandeur (y) réglante se trouve encore dans son domaine de réglage.

2. Dispositif de régulation suivant la revendication 1, caractérisé en ce que

- l'élément de régulation PID est un élément de régulation PID numérique, dont la composante P $y_p$, la composante I $y_I$ et la composante D $y_D$ sont déterterminées suivant les formules suivantes :

$$\text{Composante P: } y_p(k) = K_p \, x_d(k),$$

$$\text{Compossante I : } y_I(k) = y_I(k-1) + K_1 \, (x_d(k-1) + x_d(k)),$$

$$\text{Composante D : } y_D(k) = K_2 \, (x_d(k) - x_d(k-1)) - K_3 \, y_D(k-1),$$

avec les constantes auxiliaires

$$K_1 = 0{,}5 \, K_p \, T_A \, / \, T_N,$$

$$K_2 = 2 \, V \, K_p \, T_v \, / \, (V \, T_A + 2 \, T_v),$$

$$K_3 = (V \, T_A - 2 \, T_v) \, / \, (V \, T_A + 2 \, T_v),$$

qui sont déterminées par les paramètres de régulateur facteur de proportionnalité $K_p$, temps de compensation $T_N$, temps de dérivation $T_v$, gain de dérivation V et temps d'échantillonnage $T_A$, et

- la grandeur (e) auxilaire est déterminée en tant que grandeur (r) d'entrée de régulateur, si une grandeur réglante imaginaire sans limitation se trouvait, en raison de la différence ($x_d$) de régulation, à l'extérieur de la limitation, suivant la formule

$$e(k) = \frac{y_B - y_I(k-1) - (K_1 - K_2) \, x_d(k-1) + K_3 \, y_D(k-1)}{K_p + K_1 + K_2}$$

3. Dispositif de régulation suivant la revendication 1 ou 2, caractérisé en ce que l'élément de régulation PID est calculé suivant la méthode du meilleur module.

## FIG 1

# FIG 2

# FIG 3